# FASCICULE DE BREVET EUROPEEN

(11) **EP 2 740 981 B1**
(45) Date de publication et mention de la délivrance du brevet: **20.05.2015**
(21) Numéro de dépôt: 13195530.4
(22) Date de dépôt: 03.12.2013
(51) Int. Cl.: F16K 31/124, G05D 16/16

(54) **Vanne à double niveau de régulation et dispositif de degivrage d'une entrée d'air d'une nacelle d'aéronef intégrant ladite vanne**
Ventil mit doppelter Regulierstufe, und Enteisungsvorrichtung eines Lufteinlasses einer mit diesem Ventil ausgestatteten Luftfahrzeuggondel
Valve with double control level and device for de-icing an air intake of an aircraft nacelle including said valve

(30) Priorité: 05.12.2012 FR 1261656
(43) Date de publication de la demande: 11.06.2014
(73) Titulaire: AIRBUS OPERATIONS (S.A.S), 31060 Toulouse (FR)
(72) Inventeur: Pirat, Guillaume, 81600 TECOU (FR)
(74) Mandataire: Sarraméa, Claude

(56) Documents cités:
- EP-A2- 2 256 390
- US-A1- 2005 242 310

## Description

La présente invention se rapporte à une vanne à double niveau de régulation ainsi qu'à un dispositif de dégivrage d'une entrée d'air d'une nacelle d'aéronef intégrant ladite vanne.

De manière connue, un ensemble propulsif d'un aéronef comprend une nacelle dans laquelle est disposée de manière sensiblement concentrique une motorisation. La nacelle comprend à l'avant une entrée d'air qui se prolonge à l'intérieur de la nacelle par un conduit permettant de canaliser l'air en direction de la motorisation.

Dans certaines conditions, du givre ou de la glace peut avoir tendance à se former au niveau de l'entrée d'air. Il est nécessaire de limiter cette formation du givre ou de la glace afin d'éviter que des blocs de glace soient ingérés par la motorisation et l'endommagent. A cet effet, la nacelle comprend un dispositif de dégivrage. Pour la suite de la description, le dégivrage englobe aussi bien le traitement du givre que de la glace.

La présente invention se rapporte plus particulièrement aux nacelles intégrant un dispositif de dégivrage de type pneumatique, utilisant de l'air chaud prélevé au niveau du compresseur de la motorisation susceptible d'être injecté au niveau de l'entrée d'air et plus particulièrement d'être mis en contact avec la paroi interne de l'entrée d'air.

Selon un mode de réalisation connu d'après les documents FR-2.813.581 et US-6.443.395, illustré sur la figure 1, une nacelle 10 comprend à l'intérieur une cloison appelée cadre avant 12 qui délimite avec l'entrée d'air 14 un conduit annulaire 16 également appelé « D-duct » qui s'étend sur toute la circonférence de la nacelle et qui a une section en forme approximativement de D.

Ce conduit 16 comprend une alimentation en air chaud avec au moins un orifice 18 et un échappement 20 pour évacuer l'air refroidi utilisé pour le dégivrage.

L'air chaud est prélevé au niveau d'une sortie 24 d'un étage de compresseur de la motorisation 22 et l'alimentation en air chaud comprend une canalisation 26 pour l'acheminer jusqu'à l'orifice 18. Cette canalisation 26 comprend des moyens 28 de mesure de la pression ainsi que des moyens pour réguler la pression afin de délivrer au niveau de l'orifice 18 la quantité requise d'air chaud.

Une motorisation 22 comprend plusieurs sorties 24, 24', 24" avec chacune un couple température/pression différent les uns des autres. La sortie 24 est choisie en établissant un compromis entre les besoins en air chaud pour le dégivrage et les capacités structurelle et thermique de l'entrée d'air 14. Ainsi, le flux d'air prélevé doit avoir une pression et une température élevées pour assurer un dégivrage efficace. A l'inverse, une température et/ou une pression trop élevée peut endommager l'entrée d'air qui est généralement réalisée à partir de matériaux composites.

Les moyens pour réguler la pression comprennent une première vanne de régulation de pression 30 et une vanne de régulation de pression et d'arrêt 32.

La vanne de régulation de pression est contrôlée par un solénoïde et peut occuper deux positions, une position totalement ouverte et une position régulée. Cette vanne 30 est régulée de manière pneumatique à un unique niveau de pression.

La vanne de régulation de pression et d'arrêt 32 est contrôlée par deux solénoïdes et peut occuper trois positions, une position totalement ouverte, une position régulée et une position fermée. Cette vanne 32 est régulée de manière pneumatique à un unique niveau de pression identique à celui de la vanne de régulation de pression 30.

En l'absence de signal électrique, la vanne de régulation de pression et d'arrêt 32 occupe la position totalement ouverte alors que la vanne de régulation occupe la position régulée.

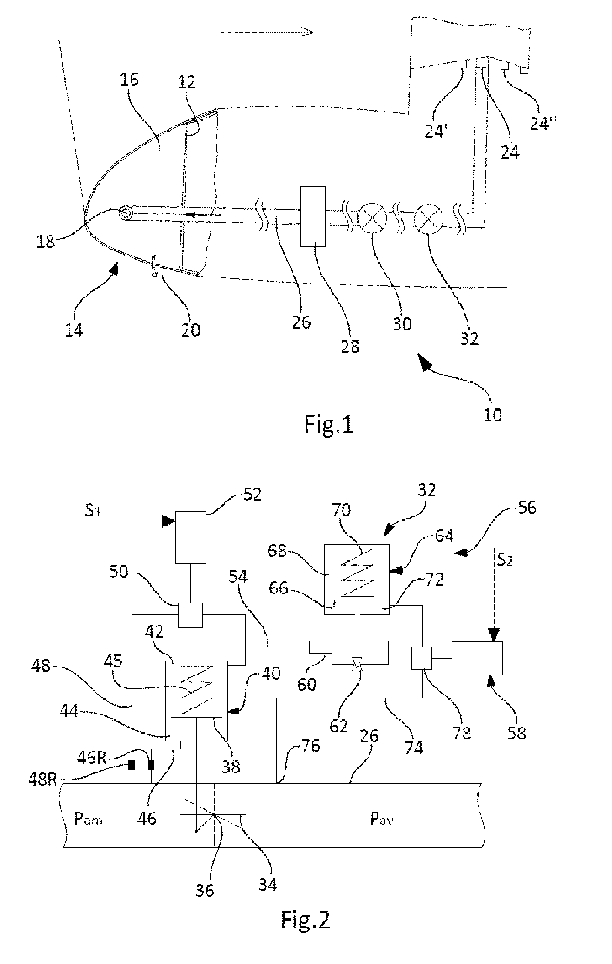

Sur la figure 2, on a représenté de manière schématique une vanne de régulation de pression et d'arrêt 32. Cette dernière comprend un volet 34 de type papillon pivotant dans la canalisation 26, susceptible, en pivotant autour d'un axe de rotation 36, d'occuper trois positions, une position totalement ouverte (en trait fort), une position régulée et une position fermée (en pointillés).

Le flux circulant dans la canalisation 26 a une pression Pam en amont du volet 34 et une pression Pav en aval du volet 34.

La position de ce volet 34 est assujettie à une tige d'un piston 38 d'un actionneur 40 de type pneumatique qui comprend deux chambres séparées par le piston, une chambre de contrôle 42 à une pression Pc et une chambre de tête 44 à une pression Pt. Lorsque le volume de la chambre de contrôle 42 augmente, la tige du piston provoque la rotation du volet 34 vers la position totalement ouverte. Lorsque le volume de la chambre de contrôle 42 diminue, la tige du piston provoque la rotation du volet 34 vers la position fermée.

La chambre de contrôle 42 comprend un ressort 45 qui tend à augmenter le volume de ladite chambre 42 et donc à provoquer la pleine ouverture du volet 34 lorsque Pc et Pt sont identiques.

Un conduit 46 s'étend depuis un piquage disposé en amont du volet 34 jusqu'à la chambre de tête 44.

Un conduit 48 s'étend depuis un piquage disposé en amont du volet jusqu'à la chambre de contrôle 42.

Chaque conduit 46, 48 comprend un réducteur de pression 46R et 48R.

Le conduit 48 comprend une première vanne 50 susceptible d'occuper deux états passant ou bloqué, commandée par un premier solénoïde 52. Par défaut, la première vanne 50 est à l'état passant. En l'absence de signal, le premier solénoïde 52 est désactivé et la première vanne 50 est à l'état passant. Le volet 34 peut être en position régulée ou totalement ouverte selon la différence de pression entre Pt et Pc.

A réception d'un signal S1, le premier solénoïde 52 est activé provoquant le changement d'état de la première vanne 50 à l'état bloqué. Dans ce cas, le volet 34 occupe la position fermée puisque la chambre de contrôle est non pressurisée. Le conduit 48 comprend un raccordement avec un conduit 54 relié à un moyen 56 de pilotage à une pression de consigne. Ce moyen 56 de pilotage permet de comparer la pression aval Pav à une pression de consigne et d'ajuster la pression Pc en fonction de cette comparaison afin de positionner le volet 34 dans la position régulée. Ce moyen 56 de pilotage peut être activé ou désactivé grâce à un second solénoïde 58.

Selon un mode de réalisation, le moyen 56 de pilotage comprend une réserve 60 reliée au conduit 54 avec un échappement 62 ainsi qu'un actionneur appelé pilote 64 comportant un piston 66 dont la tige contrôle l'échappement 62. Le pilote 62 comprend deux chambres, une première chambre 68 contenant un ressort 70 et une seconde chambre 72 reliée grâce à un conduit 74 à un piquage 76 prévu en aval du volet 34. Lorsque la pression Pav exerce sur le piston 66 un effort inférieur à celui exercé par le ressort 70, la tige du piston 66 tend à maintenir l'échappement 62 à l'état fermé. Au contraire, lorsque la pression Pav exerce un effort supérieur à celui exercé par le ressort 70, la tige du piston 66 ouvre l'échappement 62 ce qui tend à faire baisser la pression Pc de la chambre de contrôle et à déplacer le volet 34 vers la position fermée.

Un équilibre s'opère lorsque la pression Pav est égale à la pression de consigne et le volet occupe la position régulée.

Pour activer ou désactiver le moyen 56 de pilotage, le conduit 74 comprend une seconde vanne 78 susceptible d'occuper deux états passant ou bloqué, commandée par le second solénoïde 58. En l'absence de signal, le second solénoïde 58 est désactivé et la seconde vanne 78 est à l'état bloqué. Dans ce cas, le moyen 56 de pilotage est désactivé et, si le premier solénoïde 52 est désactivé, le volet 34 est en position totalement ouverte.

En réception d'un signal S2, le second solénoïde 58 est activé et la seconde vanne 78 est à l'état passant. Dans ce cas, le moyen 56 de pilotage est activé et, si le premier solénoïde 52 est désactivé, le volet 34 est en position régulée.

Ainsi, selon le mode de réalisation présenté ci-dessus, en l'absence de signal S1 et S2, le volet est en position totalement ouverte. A réception du signal S1, le volet est en position fermée. A réception du signal S2, le volet est en position régulée.

Selon l'art antérieur, la vanne de régulation de pression et d'arrêt 32 autorise un unique niveau de régulation à une pression de consigne qui est fonction des caractéristiques du ressort 70, du volume de la réserve 60 et/ou de l'échappement 62.

Ce type de régulation procure les avantages suivants :
- Une logique de commande simple qui est fonction uniquement de la réception ou non d'un signal,
- Un pilotage de la régulation simple en raison de l'absence d'une boucle d'asservissement à la manière d'une servovalve électrohydraulique,
- Une fiabilité élevée du fait du faible nombre d'éléments,
- Un fonctionnement sûr pour assurer des performances d'antigivrage, le volet 34 étant en position totalement ouverte par défaut.

Même s'il comprend de nombreux avantages, ce type de régulation peut ne pas être pleinement satisfaisant du fait que la régulation ne peut s'opérer que selon un unique niveau de pression.

Ainsi, dans certaines circonstances, par exemple pour certaines motorisations, il n'est pas possible d'établir un compromis pour toutes les phases de vol, avec un seul niveau de régulation, entre l'efficacité du dégivrage et la température et la pression maximales acceptables par l'entrée d'air.

Pour d'autres besoins en air chaud de l'aéronef, comme par exemple l'air conditionné de la cabine, le flux d'air chaud prélevé au niveau de la motorisation doit être régulé de manière plus flexible, selon plusieurs niveaux de régulation. Pour atteindre cet objectif, une première solution consiste à utiliser au moins deux sorties d'air chaud 24, 24' de la motorisation, les deux sorties étant connectées alternativement en fonction des phases de vol et/ou des conditions extérieures. Cette solution n'est pas pleinement satisfaisante car elle conduit à complexifier encore plus l'architecture dans l'environnement de la motorisation. Le document EP 2 256 390 A2 décrit une vanne de régulation de pression selon un seul niveau de pression, tel que mentionné précédemment. Cette vanne présente donc les mêmes inconvénients que ceux déjà décrits.

Une deuxième solution consisterait à utiliser un échangeur afin de modifier au moins l'un des paramètres (pression/température) du flux d'air régulé. Toutefois, cette solution est relativement couteuse et complexe, et conduit à augmenter la masse embarquée.

Enfin, une troisième solution consisterait à utiliser une servovalve électrohydraulique qui permet de contrôler de manière proportionnelle une pression hydraulique (et donc un degré d'ouverture du volet) en fonction d'un signal électrique. Cette solution n'est pas pleinement satisfaisante car elle conduit à complexifier la logique de commande et l'asservissement.

Aussi, la présente invention vise à remédier aux inconvénients de l'art antérieur en proposant une vanne de régulation selon deux niveaux de pression qui conserve les avantages procurés par la vanne de régulation de la pression et d'arrêt de l'art antérieur, à savoir un dispositif fiable et sûr, de conception simple, avec une logique de commande simple.

A cet effet, l'invention a pour objet une vanne de régulation de pression selon deux niveaux de pression d'un flux de gaz dans une canalisation, ladite vanne comprenant un obturateur disposé dans ladite canalisation dont la position est contrôlée par un actionneur avec deux chambres.

Selon l'invention, la vanne comprend deux moyens de pilotage, un premier moyen de pilotage à une première pression de consigne P1 permettant de positionner l'obturateur dans une première position régulée en comparant une pression Pav en aval de l'obturateur et la première pression de consigne P1, et un second moyen de pilotage à une seconde pression de consigne P2 permettant de positionner l'obturateur dans une seconde position régulée en comparant la pression Pav en aval de l'obturateur et la seconde pression de consigne P2, ainsi que des moyens de permutation pour faire communiquer de manière alternée le premier moyen de pilotage ou le second moyen de pilotage avec l'une des chambres de l'actionneur.

Dans un mode particulier de réalisation, les moyens de permutation comprennent un premier distributeur susceptible d'occuper deux états, ainsi qu'une première commande pour positionner le premier distributeur dans l'un ou l'autre des états, le premier distributeur comportant d'une part une première entrée et une seconde entrée, et d'autre part une première sortie et une seconde sortie, les première et seconde entrées communiquant respectivement avec les première et seconde sorties dans le premier état, et les première et seconde entrées communiquant respectivement avec les seconde et première sorties dans le second état.

De façon avantageuse, la première commande comprend un solénoïde susceptible d'occuper deux états, un état désactivé en l'absence de signal correspondant au second état du premier distributeur et un état activé à la réception d'un signal S1 correspondant au premier état du premier distributeur.

De façon avantageuse encore, les moyens de permutation comprennent un moyen de rappel permettant de maintenir le premier distributeur dans le second état, le second moyen de pilotage communiquant avec la chambre de l'actionneur dont l'augmentation de volume provoque le mouvement de l'obturateur vers une position totalement ouverte.

La vanne de régulation de pression selon l'invention peut encore présenter certaines des caractéristiques suivantes, prises individuellement ou en combinaison :
- l'actionneur comprend un ressort qui tend à maintenir l'obturateur en position totalement ouverte ;
- chaque chambre de l'actionneur est reliée par un conduit à un piquage prévu au niveau de la canalisation en amont de l'obturateur.

De façon avantageuse, le premier moyen de pilotage comprend une réserve avec un échappement ainsi qu'un actionneur comportant un piston dont la tige contrôle l'échappement, l'actionneur comprenant deux chambres, une première chambre contenant un ressort et une seconde chambre reliée grâce à un conduit à un piquage prévu en aval de l'obturateur.

Selon une première variante, le second moyen de pilotage comprend une réserve avec un échappement ainsi qu'un actionneur comportant un piston dont la tige contrôle l'échappement, l'actionneur comprenant deux chambres, une première chambre contenant un ressort et une seconde chambre reliée grâce à un conduit à un piquage prévu en aval de l'obturateur, ladite réserve, ledit échappement et ledit actionneur étant distincts de ceux du premier moyen de pilotage.

Selon une deuxième variante, le second moyen de pilotage comprend une réserve avec un échappement contrôlé par l'actionneur du premier moyen de pilotage, ladite réserve et ledit échappement étant distincts de ceux du premier moyen de pilotage.

Dans un mode préféré de réalisation, les moyens de permutation comprennent deux sorties et la vanne comprend des moyens permettant de faire communiquer soit les deux sorties des moyens de permutation avec les deux chambres de l'actionneur, ou soit une seule sortie avec l'une des deux chambres. Ce mode de réalisation préféré permet de positionner l'obturateur dans une position dans laquelle il ferme totalement la canalisation. Par conséquent, la vanne de régulation peut alors être qualifiée de vanne de régulation de pression et d'arrêt. Avantageusement, cette vanne de régulation de pression et d'arrêt est telle que la première pression de consigne P1 est inférieure à la seconde pression de consigne P2 et que le second moyen de pilotage est relié à la chambre de l'actionneur dont l'augmentation de volume provoque le mouvement de l'obturateur vers une position totalement ouverte.

Dans un mode de réalisation, la vanne de régulation de pression et d'arrêt comprend un second distributeur susceptible d'occuper deux états, ainsi qu'une seconde commande pour positionner le second distributeur dans l'un des deux états, les deux sorties des moyens de permutation communiquant avec les deux chambres de l'actionneur dans le premier état, une seule sortie communiquant avec l'une des deux chambres dans le second état.

La vanne de régulation de pression et d'arrêt peut encore présenter certaines des caractéristiques suivantes, prises individuellement ou en combinaison :
- la seconde commande comprend un solénoïde susceptible d'occuper deux états, un état désactivé en l'absence de signal correspondant au premier état du second distributeur et un état activé à la réception d'un signal S2 correspondant au second état du second distributeur ;
- la vanne comprend un moyen de rappel permettant de maintenir le second distributeur dans le premier état.

L'invention est également relative à un dispositif de dégivrage d'une entrée d'air d'une nacelle d'un aéronef comprenant une vanne de régulation de pression ou une vanne de régulation de pression et d'arrêt telles que mentionnées précédemment.

D'autres caractéristiques et avantages ressortiront de la description qui va suivre de l'invention, description donnée à titre d'exemple uniquement, en regard des dessins annexés sur lesquels :
- la figure 1 est une représentation schématique d'une partie d'une nacelle d'un aéronef selon l'art antérieur,
- la figure 2 est un schéma d'une vanne de régulation de pression et d'arrêt selon l'art antérieur,
- la figure 3 est un schéma d'une vanne de régulation de pression et d'arrêt selon une première variante de l'invention,
- les figures 4A à 4D sont des schémas illustrant les différents états des distributeurs correspondant respectivement aux positions totalement fermée, ouverte, régulée selon une première pression et régulée selon une seconde pression, et
- la figure 5 est un schéma d'une vanne de régulation de pression et d'arrêt selon une autre variante de l'invention.

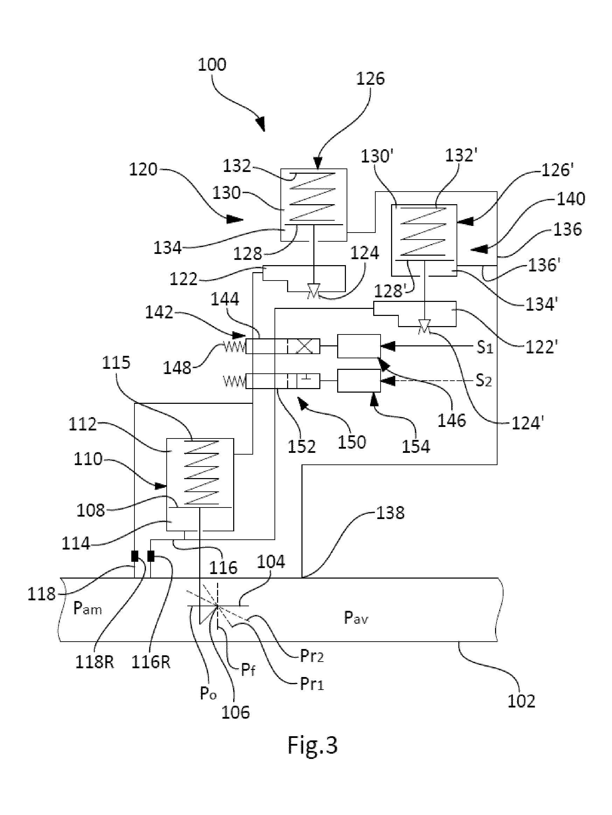

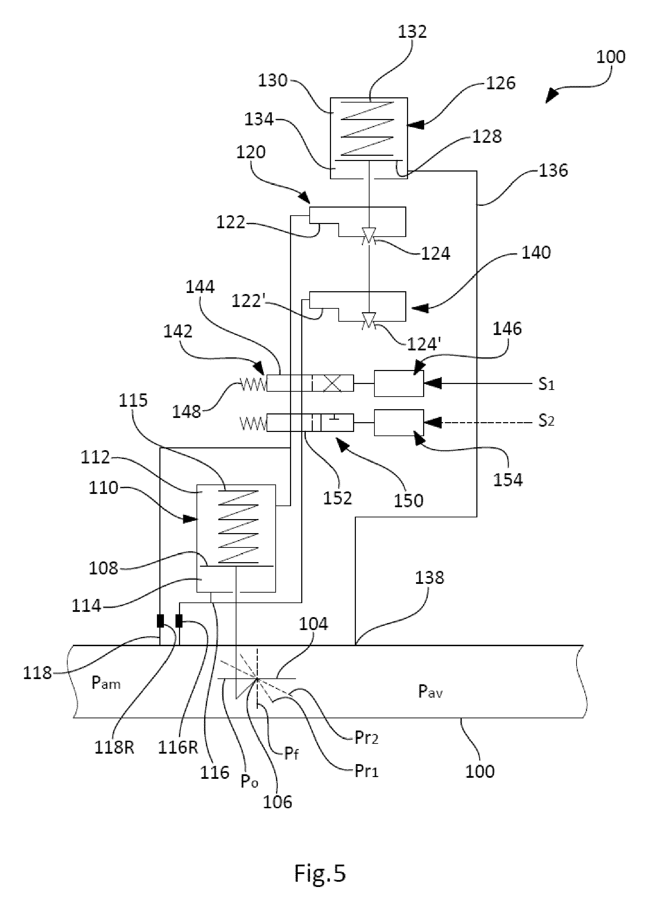

Sur les figures 3 et 5, on a représenté une vanne 100 de régulation de pression et d'arrêt prévue au niveau d'une canalisation 102 permettant d'acheminer un flux de gaz.

Cette vanne est comprise dans un dispositif de dégivrage d'une entrée d'air d'une nacelle d'aéronef dont les autres éléments peuvent être identiques à ceux de l'art antérieur. Par conséquent, ils ne sont pas plus décrits.

Comme pour l'art antérieur, la vanne 100 comprend un obturateur 104 disposé dans la canalisation 102, tel qu'un volet de type papillon susceptible de pivoter autour d'un axe de rotation 106.

Le flux circulant dans la canalisation 102 a une pression amont Pam en amont de l'obturateur 104 et une pression aval Pav en aval de l'obturateur 104.

L'obturateur 104 est assujetti à une tige d'un piston 108 d'un actionneur 110 de type pneumatique qui comprend deux chambres séparées par le piston, une chambre de contrôle 112 à une pression Pc et une chambre de tête 114 à une pression Pt. Lorsque le volume de la chambre de contrôle 112 augmente, la tige du piston 108 provoque un mouvement de l'obturateur 104 vers une position totalement ouverte. Lorsque le volume de la chambre de contrôle 112 diminue, la tige du piston 108 provoque un mouvement de l'obturateur 104 vers une position fermée.

La chambre de contrôle 112 comprend un ressort 115 qui tend à augmenter le volume de ladite chambre 112 et par conséquent à maintenir l'obturateur en position totalement ouverte.

Un conduit 116 s'étend depuis un piquage disposé au niveau de la canalisation en amont de l'obturateur 104 jusqu'à la chambre de tête 114.

Un conduit 118 s'étend depuis un piquage disposé au niveau de la canalisation en amont de l'obturateur 104 jusqu'à la chambre de contrôle 112.

Chaque conduit 116, 118 comprend un réducteur de pression 116R et 118R.

La vanne 100 comprend un premier moyen 120 de pilotage à une première pression de consigne P1 qui communique avec l'une des deux chambres 112, 114, en l'occurrence la chambre de contrôle 112 afin de modifier la position de l'obturateur 104 en comparant la pression aval Pav et la première pression de consigne P1.

Selon un mode de réalisation, le premier moyen 120 de pilotage comprend une réserve 122 avec un échappement 124 ainsi qu'un actionneur appelé pilote 126 comportant un piston 128 dont la tige contrôle l'échappement 124. Le pilote 126 comprend deux chambres, une première chambre 130 contenant un ressort 132 et une seconde chambre 134 reliée grâce à un conduit 136 à un piquage 138 prévu en aval de l'obturateur 104. Lorsque la pression Pav exerce sur le piston 128 un effort inférieur à celui exercé par le ressort 132, la tige du piston 128 tend à maintenir l'échappement 124 à l'état fermé. Au contraire, lorsque la pression Pav exerce un effort supérieur à celui exercé par le ressort 132, la tige du piston 128 ouvre l'échappement 124.

Selon l'invention, la vanne 100 comprend un second moyen 140 de pilotage à une seconde pression de consigne P2. Ce moyen 140 de pilotage permet de modifier la position de l'obturateur 104 en comparant la pression aval Pav et la seconde pression de consigne P2. En complément, la vanne 100 comprend des moyens de permutation 142 pour faire communiquer de manière alternée le premier moyen 120 de pilotage ou le second moyen 140 de pilotage avec la chambre de contrôle 112 de l'actionneur 110 utilisé pour contrôler le volet 104.

Selon cette configuration, il est possible de positionner l'obturateur selon une première position régulée Pr1 lorsque la chambre de contrôle est reliée au premier moyen 120 de pilotage à un premier niveau de pression P1, et selon une deuxième position régulée Pr2 lorsque la chambre de contrôle est reliée au second moyen 140 de pilotage à un second niveau de pression P2.

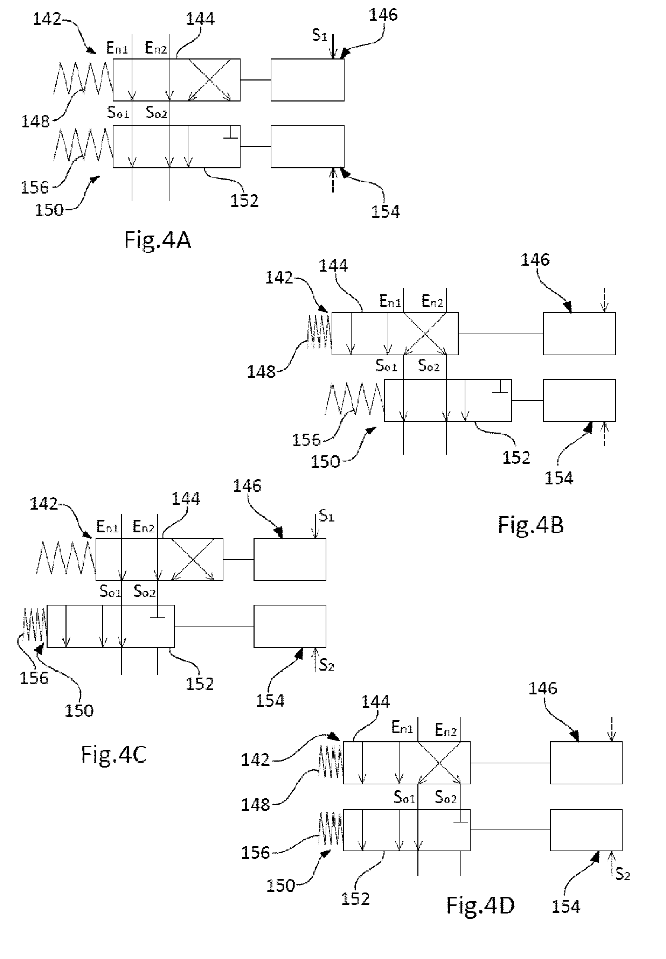

De préférence, les moyens de permutation 142 comprennent un premier distributeur 144 susceptible d'occuper deux états, un premier état (figures 3, 4A, 4C et 5) dans lequel le premier moyen 120 de pilotage communique avec la chambre de contrôle 112 et un second état (figures 4B et 4D) dans lequel le second moyen 140 de pilotage communique avec la chambre de contrôle 112, ainsi qu'une première commande 146 pour positionner le premier distributeur 144 dans l'un ou l'autre des états.

Selon un mode de réalisation, la première commande 146 se présente sous la forme d'un solénoïde susceptible d'occuper deux états, un état désactivé en l'absence de signal et un état activé à la réception d'un signal S1. Lorsque le solénoïde est activé, le premier distributeur 144 est dans le premier état et le premier moyen 120 de pilotage communique avec la chambre de contrôle 112.

De préférence, les moyens de permutation 142 comprennent un moyen de rappel 148 tel qu'un ressort de traction permettant de maintenir le premier distributeur 144 dans le second état, le second moyen 140 de pilotage communiquant avec la chambre de contrôle 112.

Selon un mode de réalisation préféré, les moyens de permutation 142 sont susceptibles d'occuper deux états, un premier état dans lequel le premier moyen 120 de pilotage communique avec la chambre de contrôle 112 et le second moyen 140 de pilotage communique avec la chambre de tête 114, et un second état dans lequel le premier moyen 120 de pilotage communique avec la chambre de tête 114 et le second moyen 140 de pilotage communique avec la chambre de contrôle 112. Les moyens de permutation 142 comprennent deux entrées, une première entrée En1 reliée au premier moyen 120 de pilotage et une seconde entrée En2 reliée au second moyen 140 de pilotage, ainsi que deux sorties, une première sortie So1 et une seconde sortie So2, les entrées En1 et En2 communiquant respectivement avec les sorties So1 et So2 dans le premier état, et les entrées En1 et En2 communiquant respectivement avec les sorties So2 et So1 dans le second état (voir figure 4A).

En complément, la vanne 100 comprend des moyens 150 permettant de faire communiquer soit les deux sorties des moyens de permutation 142 avec la chambre de contrôle 112 et la chambre de tête 114, ou soit une seule sortie avec la chambre de contrôle 112 ou la chambre de tête 114.

Ce mode de réalisation préféré permet à la vanne 100 de positionner l'obturateur 104 selon quatre positions, une position totalement ouverte Po, une position totalement fermée Pf, une première position régulée Pr1 (variable angulairement en fonction de la pression amont Pam) à un niveau de pression P1 et une seconde position régulée Pr2 (variable angulairement en fonction de la pression amont Pam) à un niveau de pression P2.

Selon un mode de réalisation, le niveau de pression P1 du premier moyen de pilotage 120 est inférieur au niveau de pression P2 du second moyen de pilotage 140.

Selon un mode de réalisation, les moyens 150 comprennent un second distributeur 152 susceptible d'occuper deux états, un premier état dans lequel les sorties So1 et So2 des moyens de permutation 142 communiquent respectivement avec la chambre de contrôle 112 et la chambre de tête 114, et un second état dans lequel seule la sortie So1 des moyens de permutation 142 communique avec la chambre de contrôle 112, ainsi qu'une seconde commande 154 pour positionner le second distributeur 152 soit dans le premier état ou soit dans le second état.

Selon un mode de réalisation, la seconde commande 154 se présente sous la forme d'un solénoïde susceptible d'occuper deux états, un état désactivé en l'absence de signal et un état activé à la réception d'un signal S2. Lorsque le solénoïde est activé, le second distributeur 152 est dans le second état et seule la sortie So1 des moyens de permutation 142 communique avec la chambre de contrôle 112.

De préférence, un moyen de rappel 156 tel qu'un ressort de compression permet de maintenir le second distributeur 152 dans le premier état.

Le principe de fonctionnement de la vanne est décrit au regard des figures 4A à 4D.

En l'absence de signal S1, S2, les moyens de permutation 142 et les moyens 150 sont respectivement dans le second état et dans le premier état, comme illustré sur la figure 4B. Dans ce cas, le premier moyen de pilotage 120 communique avec la chambre de tête 114 et le second moyen de pilotage 140 communique avec la chambre de contrôle 112. La force exercée par le niveau de pression P1 étant bien inférieure aux forces exercées par le niveau de pression P2 et le ressort 115, l'obturateur 104 tend à s'ouvrir. Lorsque l'obturateur 104 est totalement ouvert, son état totalement ouvert est maintenu par un échappement 124 du premier moyen de pilotage 120 plus important que l'échappement 124' du second moyen de pilotage 140 lorsque les deux moyens de pilotage 120 et 140 sont pleinement alimentés à la pression aval Pav par les conduits 136 et 136'.

A réception d'un signal S1 et en l'absence de signal S2, comme illustré sur la figure 4A, les moyens de permutation 142 et les moyens 150 sont dans le premier état. Dans ce cas, le premier moyen de pilotage 120 communique avec la chambre de contrôle 112 et le second moyen de pilotage 140 communique avec la chambre de tête 114. Le niveau de pression P1 étant largement inférieur au niveau de pression P2, l'obturateur 104 tend à se fermer. La position fermée est maintenue grâce à une différence de pression obtenue grâce aux réducteurs 116R et 118R et/ou grâce à un échappement 124 du premier moyen de pilotage 120 plus important que l'échappement 124' du second moyen de pilotage 140 lorsque les deux moyens de pilotage ne sont plus alimentés par les conduits 136 et 136', l'obturateur 104 étant totalement fermé et la pression aval Pav nulle. Afin d'assurer une bonne dynamique de fermeture, il est nécessaire que la somme des forces exercées par le niveau de pression P1 et par le ressort 115 soit inférieure à la force exercée par la pression P2.

A réception d'un signal S2 et en l'absence de signal S1, comme illustré sur la figure 4D, les moyens de permutation 142 et les moyens 150 sont dans le second état. Dans ce cas, seul le second moyen de pilotage 140 communique avec la chambre de contrôle 112 et l'obturateur 104 occupe la position régulée Pr2 selon le second niveau de pression P2.

A réception d'un signal S1 et d'un signal S2, comme illustré sur la figure 4C, les moyens de permutation 142 et les moyens 150 sont respectivement dans le premier état et dans le second état. Dans ce cas, seul le premier moyen de pilotage 120 communique avec la chambre de contrôle 112 et l'obturateur 104 occupe la position régulée Pr1 selon le premier niveau de pression P1.

Le niveau de pression P1 étant toujours bien inférieur au niveau de pression P2, la position régulée Pr1 correspond à une chambre de contrôle 112 peu pressurisée et donc à un niveau de régulation bas. Ainsi, Pr1 correspond au seuil de régulation bas et Pr2 au seuil de régulation haut.

Comme pour l'art antérieur, la vanne selon l'invention procure les avantages suivants :
- Une logique de commande simple qui est fonction uniquement de la réception ou non d'un signal,
- Un pilotage de la régulation simple en raison de l'absence d'une boucle d'asservissement à la manière d'une servovalve électrohydraulique
- Une fiabilité élevée du fait du faible nombre d'éléments,
- Un fonctionnement sûr, le volet 34 étant en position totalement ouverte par défaut.

En plus, des avantages énoncés ci-dessus, la vanne selon l'invention permet une régulation selon deux niveaux de pression, ce qui permet d'obtenir un meilleur compromis entre l'efficacité du dégivrage et la température et la pression maximales acceptables par l'entrée d'air quelles que soient les phases de vols et/ou les conditions extérieures.

Différentes solutions peuvent être envisagées pour les moyens de pilotage 120 et 140.

Selon une première variante illustrée sur la figure 3, les moyens de pilotage 120 et 140 sont indépendants et distincts.

Comme précédemment décrit, le premier moyen de pilotage 120 comprend une réserve 122 avec un échappement 124 ainsi qu'un actionneur appelé pilote 126 comportant un piston 128 dont la tige contrôle l'échappement 124. Le pilote 126 comprend deux chambres, une première chambre 130 contenant un ressort 132 et une seconde chambre 134 reliée grâce à un conduit 136 à un piquage 138 prévu en aval de l'obturateur 104.

Le niveau de pression P1 dépend des caractéristiques du ressort 132, de l'échappement 124 et/ou de la réserve 122.

En complément, le second moyen de pilotage 140 comprend une réserve 122' avec un échappement 124' ainsi qu'un actionneur appelé pilote 126' comportant un piston 128' dont la tige contrôle l'échappement 124'. Le pilote 126' comprend deux chambres, une première chambre 130' contenant un ressort 132' et une seconde chambre 134' reliée grâce à un conduit 136' à un piquage prévu en aval de l'obturateur 104, ce piquage pouvant être confondu avec le piquage 138.

Le niveau de pression P2 dépend des caractéristiques du ressort 132', de l'échappement 124' et/ou de la réserve 122'.

Selon une autre variante illustrée sur la figure 5, les moyens de pilotage 120 et 140 peuvent avoir des éléments communs. Selon cette variante, les moyens de pilotage 120 et 140 comprennent respectivement des réserves 122, 122' et des échappements 124, 124' distincts. Ils comprennent en commun un unique actionneur appelé pilote 126 avec un piston 128 dont la tige contrôle les deux échappements 124 et 124', le pilote 126 comprenant deux chambres, une première chambre 130 contenant un ressort 132 et une seconde chambre 134 reliée grâce à un conduit 136 à un piquage 138 prévu en aval de l'obturateur 104. Selon cette variante, le niveau de pression P1 dépend des caractéristiques de l'échappement 124 et/ou de la réserve 122, et le niveau de pression P2 dépend des caractéristiques de l'échappement 124' et/ou de la réserve 122'.

La variante illustrée sur la figure 5 permet de réduire le nombre de pièces par rapport à la variante illustrée sur la figure 3 et donc d'augmenter la fiabilité de la vanne 100 de régulation de pression et d'arrêt.

## Revendications

1. Vanne de régulation de pression selon deux niveaux de pression d'un flux de gaz dans une canalisation (102), ladite vanne comprenant un obturateur (104) disposé dans ladite canalisation (102) dont la position est contrôlée par un actionneur (110) qui comprend deux chambres (112, 114), un premier moyen (120) de pilotage à une première pression de consigne P1 permettant de positionner l'obturateur (104) dans une première position régulée (Pr1) en comparant une pression Pav en aval de l'obturateur et la première pression de consigne P1, ladite vanne comprenant un second moyen (140) de pilotage à une seconde pression de consigne P2 permettant de positionner l'obturateur (104) dans une seconde position régulée (Pr2) en comparant la pression Pav en aval de l'obturateur (104) et la seconde pression de consigne P2 ainsi que des moyens de permutation (142) pour faire communiquer de manière alternée le premier moyen (120) de pilotage ou le second moyen (140) de pilotage avec l'une des chambres de l'actionneur (110).

2. Vanne de régulation de pression selon la revendication 1, dans laquelle les moyens de permutation (142) comprennent un premier distributeur (144) susceptible d'occuper deux états, ainsi qu'une première commande (146) pour positionner le premier distributeur (144) dans l'un ou l'autre des états, le premier distributeur (144) comportant d'une part une première entrée (En1) et une seconde entrée (En2), et d'autre part une première sortie (So1) et une seconde sortie (So2), les première et seconde entrées (En1, En2) communiquant respectivement avec les première et seconde sorties (So1, So2) dans le premier état, et les première et seconde entrées (En1, En2) communiquant respectivement avec les seconde et première sorties (So2, So1) dans le second état.

3. Vanne de régulation de pression selon la revendication précédente, dans laquelle la première commande (146) comprend un solénoïde susceptible d'occuper deux états, un état désactivé en l'absence de signal correspondant au second état du premier distributeur (144) et un état activé à la réception d'un signal S1 correspondant au premier état du premier distributeur (144).

4. Vanne de régulation de pression selon la revendication 2 ou 3, dans laquelle les moyens de permutation (142) comprennent un moyen de rappel (148) permettant de maintenir le premier distributeur (144) dans le second état, le second moyen (140) de pilotage communiquant avec la chambre (112) de l'actionneur (110) dont l'augmentation de volume provoque le mouvement de l'obturateur (104) vers une position totalement ouverte.

5. Vanne de régulation de pression selon l'une des revendications précédentes, dans laquelle l'actionneur (110) comprend un ressort (115) qui tend à maintenir l'obturateur (104) en position totalement ouverte.

6. Vanne de régulation de pression selon l'une des revendications précédentes, dans laquelle chaque chambre (112, 114) de l'actionneur (110) est reliée par un conduit à un piquage prévu au niveau de la canalisation (102) en amont de l'obturateur (104).

7. Vanne de régulation de pression selon l'une des revendications précédentes, dans laquelle le premier moyen (120) de pilotage comprend une réserve (122) avec un échappement (124) ainsi qu'un actionneur (126) comportant un piston (128) dont la tige contrôle l'échappement (124), l'actionneur (126) comprenant deux chambres, une première chambre (130) contenant un ressort (132) et une seconde chambre (134) reliée grâce à un conduit (136) à un piquage (138) prévu en aval de l'obturateur (104).

8. Vanne de régulation de pression selon la revendication précédente, dans laquelle le second moyen (140) de pilotage comprend une réserve (122') avec un échappement (124') ainsi qu'un actionneur (126') comportant un piston (128') dont la tige contrôle l'échappement (124'), l'actionneur (126') comprenant deux chambres, une première chambre (130') contenant un ressort (132') et une seconde chambre (134') reliée grâce à un conduit (136') à un piquage prévu en aval de l'obturateur (104'), ladite réserve (122'), ledit échappement (124') et ledit actionneur (126') étant distincts de ceux du premier moyen (120) de pilotage.

9. Vanne de régulation de pression selon la revendication 7, dans laquelle le second moyen (140) de pilotage comprend une réserve (122') avec un échappement (124') contrôlé par l'actionneur (126) du premier moyen (120) de pilotage, ladite réserve (122') et ledit échappement (124') étant distincts de ceux du premier moyen (120) de pilotage.

10. Vanne de régulation de pression selon l'une des revendications précédentes, dans laquelle les moyens de permutation (142) comprennent deux sorties (So1, So2) et en ce que la vanne comprend des moyens (150) permettant de faire communiquer soit les deux sorties (So1, So2) des moyens de permutation (142) avec les deux chambres (112, 114) de l'actionneur (110), ou soit une seule sortie (So1) avec l'une des deux chambres (112, 114).

11. Vanne de régulation de pression selon la revendication 10, dans laquelle la première pression de consigne P1 est inférieure à la seconde pression de consigne P2 et en ce que le second moyen de pilotage (140) est relié à la chambre (112) de l'actionneur (110) dont l'augmentation de volume provoque le mouvement de l'obturateur (104) vers une position totalement ouverte.

12. Vanne de régulation de pression selon l'une des revendications 10 ou 11, laquelle comprend un second distributeur (152) susceptible d'occuper deux états, ainsi qu'une seconde commande (154) pour positionner le second distributeur (152) dans l'un des deux états, les deux sorties (So1, So2) des moyens de permutation (142) communiquant avec les deux chambres (112, 114) de l'actionneur (110) dans le premier état, une seule sortie (So1) communiquant avec l'une des deux chambres (112, 114) dans le second état.

13. Vanne de régulation de pression selon la revendication précédente, dans laquelle la seconde commande (154) comprend un solénoïde susceptible d'occuper deux états, un état désactivé en l'absence de signal correspondant au premier état du second distributeur (152) et un état activé à la réception d'un signal S2 correspondant au second état du second distributeur (152).

14. Vanne de régulation de pression selon la revendication 12 ou 13, laquelle comprend un moyen de rappel (156) permettant de maintenir le second distributeur (152) dans le premier état.

15. Dispositif de dégivrage d'une entrée d'air d'une nacelle d'un aéronef comprenant une vanne de régulation de pression selon l'une des revendications 1 à 14.

## Patentansprüche

1. Ventil zur Druckregelung eines Gasstroms in einer Rohrleitung (102) gemäß zwei Druckpegeln, wobei das Ventil ein in der Rohrleitung (102) angeordnetes Verschlussorgan (104) enthält, dessen Stellung von einem Aktuator (110) gesteuert wird, der zwei Kammern (112, 114) enthält, wobei eine erste Steuereinrichtung (120) auf einem ersten Solldruck P1 es ermöglicht, das Verschlussorgan (104) in einer ersten geregelten Stellung (Pr1) zu positionieren, indem ein Druck Pav stromabwärts hinter dem Verschlussorgan und der erste Solldruck P1 verglichen werden, wobei das Ventil eine zweite Steuereinrichtung (140) auf einem zweiten Solldruck P2, die e s ermöglicht, das Verschlussorgan (104) in einer zweiten geregelten Stellung (Pr2) zu positionieren, indem der Druck Pav stromabwärts hinter dem Verschlussorgan (104) und der zweite Solldruck P2 verglichen wird, sowie Umschalteinrichtungen (142) enthält, um die erste Steuereinrichtung (120) oder die zweite Steuereinrichtung (140) abwechselnd mit einer der Kammern des Aktuators (110) in Verbindung zu bringen.

2. Druckregelventil nach Anspruch 1, wobei die Umschalteinrichtungen (142) einen ersten Verteiler (144), der zwei Zustände einnehmen kann, sowie eine erste Steuerung (146) enthalten, um den ersten Verteiler (144) in dem einen oder anderen der Zustände zu positionieren, wobei der erste Verteiler (144) einerseits einen ersten Eingang (En1) und einen zweiten Eingang (En2) und andererseits einen ersten Ausgang (So1) und einen zweiten Ausgang (So2) aufweist, wobei der erste und der zweite Eingang (En1, En2) im ersten Zustand mit dem ersten bzw. zweiten Ausgang (So1, So2) in Verbindung stehen, und der erste und der zweite Eingang (En1, En2) im zweiten Zustand mit dem zweiten bzw. ersten Ausgang (So2, So1) in Verbindung stehen.

3. Druckregelventil nach dem vorhergehenden Anspruch, wobei die erste Steuerung (146) eine Zylinderspule enthält, die zwei Zustände einnehmen kann, einen deaktivierten Zustand in Abwesenheit eines dem zweiten Zustand des ersten Verteilers (144) entsprechenden Signals, und einen aktivierten Zustand bei Empfang eines Signals S1 entsprechend dem ersten Zustand des ersten Verteilers (144).

4. Druckregelventil nach Anspruch 2 oder 3, wobei die Umschalteinrichtungen (142) eine Rückholeinrichtung (148) enthalten, die es ermöglicht, den ersten Verteiler (144) im zweiten Zustand zu halten, wobei die zweite Steuereinrichtung (140) mit der Kammer (112) des Aktuators (110) in Verbindung steht, deren Volumenerhöhung die Bewegung des Verschlussorgans (104) in eine ganz geöffnete Stellung bewirkt.

5. Druckregelventil nach einem der vorhergehenden Ansprüche, wobei der Aktuator (110) eine Feder (115) enthält, die danach strebt, das Verschlussorgan (104) in der ganz geöffneten Stellung zu halten.

6. Druckregelventil nach einem der vorhergehenden Ansprüche, wobei jede Kammer (112, 114) des Aktuators (110) durch einem Kanal mit einem Anschluss verbunden ist, der im Bereich der Rohrleitung (102) stromaufwärts vor dem Verschlussorgan (104) vorgesehen ist.

7. Druckregelventil nach einem der vorhergehenden Ansprüche, wobei die erste Steuereinrichtung (120) eine Reserve (122) mit einem Auslass (124) sowie einen Aktuator (126) enthält, der einen Kolben (128) aufweist, dessen Stange den Auslass (124) kontrolliert, wobei der Aktuator (126) zwei Kammern enthält, eine eine Feder (132) enthaltende erste Kammer (130) und eine zweite Kammer (134), die mittels eines Kanals (136) mit einem Anschluss (138) verbunden ist, der stromabwärts hinter dem Verschlussorgan (104) vorgesehen ist.

8. Druckregelventil nach dem vorhergehenden Anspruch, wobei die zweite Steuereinrichtung (140) eine Reserve (122') mit einem Auslass (124') sowie einen Aktuator (126') enthält, der einen Kolben (128') aufweist, dessen Stange den Auslass (124') kontrolliert, wobei der Aktuator (126') zwei Kammern enthält, eine eine Feder (132') enthaltende erste Kammer (130') und eine zweite Kammer (134'), die mittels eines Kanals (136') mit einem Anschluss verbunden ist, der stromabwärts hinter dem Verschlussorgan (104') vorgesehen ist, wobei die Reserve (122'), der Auslass (124') und der Aktuator (126') sich von denen der ersten Steuereinrichtung (120) unterscheiden.

9. Druckregelventil nach Anspruch 7, wobei die zweite Steuereinrichtung (140) eine Reserve (122') mit einem Auslass (124') enthält, der vom Aktuator (126) der ersten Steuereinrichtung (120) kontrolliert wird, wobei die Reserve (122') und der Auslass (124') sich von denjenigen der ersten Steuereinrichtung (120) unterscheiden.

10. Druckregelventil nach einem der vorhergehenden Ansprüche, wobei die Umschalteinrichtungen (142) zwei Ausgänge (So1, So2) enthalten, und wobei das Ventil Einrichtungen (150) enthält, die es ermöglichen, entweder die zwei Ausgänge (So1, So2) der Umschalteinrichtungen (142) mit den zwei Kammern (112, 114) des Aktuators (110) oder einen einzigen Ausgang (So1) mit den zwei Kammern (112, 114) in Verbindung zu bringen.

11. Druckregelventil nach Anspruch 10, wobei der erste Solldruck P1 niedriger als der zweite Solldruck P2 ist, und wobei die zweite Steuereinrichtung (140) mit der Kammer (112) des Aktuators (110) verbunden ist, deren Volumenerhöhung die Bewegung des Verschlussorgans (104) in eine ganz geöffnete Stellung bewirkt.

12. Druckregelventil nach einem der Ansprüche 10 oder 11, das einen zweiten Verteiler (152), der zwei Zustände einnehmen kann, sowie eine zweite Steuerung (154) enthält, um den zweiten Verteiler (152) in einem der zwei Zustände zu positionieren, wobei die zwei Ausgänge (So1, So2) der Umschalteinrichtungen (142) im ersten Zustand mit den zwei Kammern (112, 114) des Aktuators (110) in Verbindung stehen, wobei ein einziger Ausgang (So1) im zweiten Zustand mit einer der zwei Kammern (112, 114) in Verbindung steht.

13. Druckregelventil nach dem vorhergehenden Anspruch, wobei die zweite Steuerung (154) eine Zylinderspule enthält, die zwei Zustände einnehmen kann, einen deaktivierten Zustand in Abwesenheit eines dem ersten Zustand des zweiten Verteilers (152) entsprechenden Signals, und einen aktivierten Zustand bei Empfang eines Signals S2 entsprechend dem zweiten Zustand des zweiten Verteilers (152).

14. Druckregelventil nach Anspruch 12 oder 13, das eine Rückholeinrichtung (156) enthält, die es erlaubt, den zweiten Verteiler (152) im ersten Zustand zu halten.

15. Enteisungsvorrichtung eines Lufteingangs einer Gondel eines Luftfahrzeugs, die ein Druckregelventil nach einem der Ansprüche 1 bis 14 enthält.

## Claims

1. Valve for regulating the pressure of a gas flow in a pipeline (102) according to two pressure levels, said valve comprising a gate (104) arranged in said pipeline (102), the position of which is controlled by an actuator (110) which comprises two chambers (112, 114), a first control means (120) with a first set point pressure P1 making it possible to position the gate (104) in a first regulated position (Pr1) by comparing a pressure Pav downstream of the gate and the first set point pressure P1, said valve comprising a second contol means (140) with a second set point pressure P2 making it possible to position the gate (104) in a second regulated position (Pr2) by comparing the pressure Pav downstream of the gate (104) and the second set point pressure P2 and permutation means (142) for making the first control means (120) or the second control means (140) communicate alternately with one of the chambers of the actuator (110).

2. Pressure regulation valve according to Claim 1, in which the permutation means (142) comprise a first distributor (144) which can occupy two states, and a first control (146) for positioning the first distributor (144) in one or other of the states, the first distributor (144) comprising, on the one hand, a first inlet (En1) and a second inlet (En2), and on the other hand a first outlet (So1) and a second outlet (So2), the first and second inlets (En1, En2) communicating respectively with the first and second outlets (So1, So2) in the first state, and the first and second inlets (En1, En2) communicating respectively with the second and first outlets (So2, So1) in the second state.

3. Pressure regulation valve according to the preceding claim, in which the first control (146) comprises a solenoid which can occupy two states, a deactivated state in the absence of a signal corresponding to the second state of the first distributor (144) and an activated state on reception of a signal S1 corresponding to the first state of the first distributor (144).

4. Pressure regulation valve according to Claim 2 or 3, in which the permutation means (142) comprise a return means (148) making it possible to keep the first distributor (144) in the second state, the second control means (140) communicating with the chamber (112) of the actuator (110), for which the volume increase provokes the movement of the gate (104) towards a fully open position.

5. Pressure regulation valve according to one of the preceding claims, in which the actuator (110) comprises a spring (115) which tends to keep the gate (104) in the fully open position.

6. Pressure regulation valve according to one of the preceding claims, in which each chamber (112, 114) of the actuator (110) is linked by a duct to a tap provided on the pipeline (102) upstream of the gate (104).

7. Pressure regulation valve according to one of the preceding claims, in which the first control means (120) comprises a reserve (122) with an exhaust (124) and an actuator (126) comprising a piston (128) whose rod controls the exhaust (124), the actuator (126) comprising two chambers, a first chamber (130) containing a spring (132) and a second chamber (134) linked by a duct (136) to a tap (138) provided downstream of the gate (104).

8. Pressure regulation valve according to the preceding claim, in which the second control means (140) comprises a reserve (122') with an exhaust (124') and an actuator (126') comprising a piston (128') whose rod controls the exhaust (124'), the actuator (126') comprising two chambers, a first chamber (130') containing a spring (132') and a second chamber (134') linked by a duct (136') to a tap provided downstream of the gate (104'), said reserve (122'), said exhaust (124') and said actuator (126') being distinct from those of the first control means (120).

9. Pressure regulation valve according to Claim 7, in which the second control means (140) comprises a reserve (122') with an exhaust (124') controlled by the actuator (126) of the first control means (120), said reserve (122') and said exhaust (124') being distinct from those of the first control means (120).

10. Pressure regulation valve according to one of the preceding claims, in which the permutation means (142) comprise two outlets (So1, So2) and in that the valve comprises means (150) making it possible to make either the two outlets (So1, So2) of the permutation means (142) communicate with the two chambers (112, 114) of the actuator (110), or a single outlet (So1) communicate with one of the two chambers (112, 114).

11. Pressure regulation valve according to Claim 10, in which the first set point pressure P1 is less than the second set point pressure P2 and in that the second control means (140) is linked to the chamber (112) of the actuator (110) for which the volume increase provokes the movement of the gate (104) towards a fully open position.

12. Pressure regulation valve according to either of Claims 10 and 11, which comprises a second distributor (152) which can occupy two states, and a second control (154) for positioning the second distributor (152) in one of the two states, the two outlets (So1, So2) of the permutation means (142) communicating with the two chambers (112, 114) of the actuator (110) in the first state, a single outlet (So1) communicating with one of the two chambers (112, 114) in the second state.

13. Pressure regulation valve according to the preceding claim, in which the second control (154) comprises a solenoid which can occupy two states, a deactivated state in the absence of a signal corresponding to the first state of the second distributor (152) and an activated state on reception of a signal S2 corresponding to the second state of the second distributor (152).

14. Pressure regulation valve according to Claim 12 or 13, which comprises a return means (156) making it possible to keep the second distributor (152) in the first state.

15. Device for de-icing an air inlet of an aircraft engine nacelle comprising a pressure regulation valve according to one of Claims 1 to 14.
